# EUROPEAN PATENT SPECIFICATION

(11) **EP 0 348 169 B1**
(45) Date of publication and mention of the grant of the patent: **04.05.1994**
(21) Application number: 89306258.8
(22) Date of filing: 21.06.1989
(51) Int. Cl.: G11B 5/31, G11B 5/48

(54) **Thin film magnetic head**
Dünnschicht-Magnetkopf
Tête magnétique en couches minces

(30) Priority: 23.06.1988 JP 157268/88
(43) Date of publication of application: 27.12.1989
(73) Proprietor: SHARP KABUSHIKI KAISHA, Osaka (JP)
(72) Inventor: Kira, Tohru, Tenri-shi Nara-ken (JP)
(74) Representative: Hitchcock, Esmond Antony

(56) References cited:
- EP-A- 0 163 998
- PATENT ABSTRACTS OF JAPAN vol. 9, no. 177 (P-375)(1900) 23 July 1985, & JP-A-60 050710
- IBM TECHNICAL DISCLOSURE BULLETIN vol. 26, no. 1, June 1983, pages 357 - 360; A.W.VINAL: "TWIN TRACK MAGNETIC READ/WRITE HEAD"

## Description

The present invention relates to a thin film magnetic head and, more particularly, it relates to a thin film magnetic head employed in a magnetic recording/reproducing apparatus which feeds a magnetic tape in forward and reverse directions to record and reproduce information in the bi-directional manner.

A magnetic head in a magnetic tape recording/reproducing apparatus (referred to as a streamer below) which is used for backing up a hard disc needs reading-after-writing. Therefore, the head has a recording/reproducing head comprising a recording head and a reproducing head. The recording head is positioned before the reproducing head relative to a tape traveling direction. The reproducing head is positioned after the recording head for checking record and reproducing data.

In the above streamer, a reciprocative recording/reproducing method called serial-serpentine method is usually applied in order to record and reproduce successively, or without interruption, on a plurality of tracks. The method requires two of the recording/reproducing heads disposed as stated above. These recording/reproducing heads are placed in an inverted arrangement to each other relative to the magnetic tape traveling direction, so that two of the magnetic heads are alternately used between forward and reverse traveling of the tape. When the tape has traveled to and from, the magnetic heads are shifted by a distance corresponding to a track pitch relative to the tape to record/reproduce the next track.

As a magnetic recording/reproducing apparatus has been increased in its capacity in recent years, an attempt of simultaneously reproducing a plurality of tracks has been made to enhance the data transfer rate in the above streamer. For that purpose, a thin film magnetic head is suitable which is easily multi-channeled (see United States Patent No. 4,677,036).

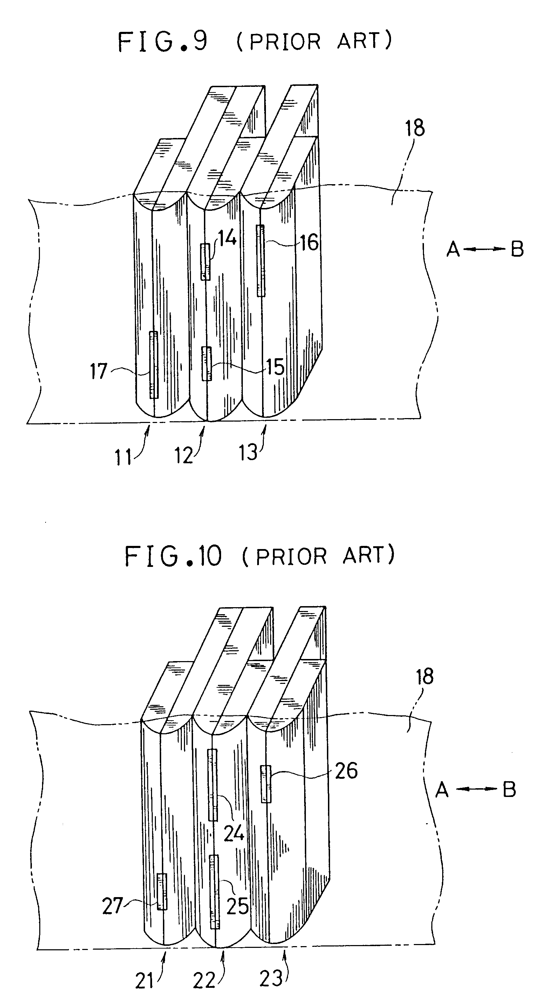

Fig. 9 shows a prior art thin film magnetic head of serial-serpentine type. The thin film magnetic head includes three head chips 11, 12 and 13. The head chip 12 in the middle is provided two reproducing head portion 14, 15 which are disposed with a distance corresponding to a track pitch multiplied by an integer. On the other hand, the adjacent head chips 11, 13 are provided with recording head portions 17, 16, respectively. The recording head portion 16 and the reproducing head portion 14 are mated to a recording/reproducing head portion while the recording head portion 17 and the reproducing head portion 15 are mated to another recording/reproducing head portion. In this way, the head portions 16, 14 carry out recording/reproducing when a tape 18 is moved in a direction of an arrow A while the head portions 17, 15 do when the tape 18 is moved in a direction of an arrow B.

Fig. 10 shows another thin film magnetic head. The thin film magnetic head includes a head chip 22 in the middle having recording head portions 24, 25 and adjacent head chips 21, 23 having reproducing head portions 27, 26. In this magnetic head, the head portions 24, 26 carry out recording/reproducing when the tape 18 is moved in the B direction while the head portions 25, 27 do when the tape 18 is moved in the A direction.

Thus, in the conventional thin film magnetic head chip, especially the head chip 12 (22) disposed in the middle, the same type of head portions are formed on one substrate; that is, the reproducing head portions alone or the recording head portions alone are on one substrate. Hence, in the case that the head chip 12 (22) is employed in the thin film magnetic head of serial-serpentine type, the head chips 11, 13 (21, 23) must be provided in parallel adjacent to the head chip 12 (22), as described above.

However, when the thin film magnetic head is formed of those three head chips 11 to 13 (21 to 23) disposed in parallel to each other, it is very difficult to position the head chips 11 to 13 (21 to 23) appropriately to each other and to keep each head chip and the magnetic tape 18 in an appropriate relative position, and the data loss due to azimuth error or deviation from recording tracks is liable to occur. Since the loss is increased as the track width or the recording wavelength is shortened, more accurate positioning of the thin film magnetic head may be required. In addition to that, it needs high accuracy that the tape is moved on and is in contact with the head chips 11 to 13 in a stable manner in any relative position, and it is disadvantageous that the loss of space is caused between each head chip and the magnetic tape 18.

An Example of a head chip having two head portions, which may be adapted for use as the central chip in the arrangement of either Figure 9 or of Figure 10, is described in EP-A-0163998.

In accordance with the present invention there is provided a thin-film magnetic head arrangement for recording and reproducing information on an elongate magnetic recording medium that is longitudinally movable bidirectionally past the head arrangement in forward and reverse movements, comprising a plurality of head chips, each of which has first and second heads spaced apart along a substrate, each head comprising a plurality of layers in stacked relation on said substrate which extend to a common edge of the latter, said stacked layers comprising a lower magnetic layer, a first insulating layer, an electro-conductive coil layer, a second insulating layer and an upper magnetic layer, said heads being aligned along a direction normal to the direction of the longitudinal movement of the recording medium, characterised in that the first and second heads of each head chip are dedicated respectively as reproducing and recording heads, being differently constructed to provide prescribed different characteristics for usage as reproducing and recording heads, in that the arrangement comprises two said head chips disposed side by side and in inverted relation such that the heads all abut a common plane with respective pairs of heads on the two substrates of said head chips disposed parallelly and aligned with respect to the longitudinal movement of the recording medium and such that a reproducing head of a first one of the two head chips is aligned with a recording head of the second head chip and the recording head of the said first head chip is aligned with the reproducing head of the second chip, said arrangement being for use in read-after-write recording of information in the forward and reverse directions of longitudinal movement of a multichannel medium.

Thus, the thin film magnetic head of a serial-serpentine type is provided which has a simple structure. A tape can be easily kept in an appropriate position relative to each of head chips, so that the data loss due to azimuth error or deviation from recording tracks can be avoided.

An embodiment of the invention will now be described by way of example only, and with reference to the accompanying drawings wherein:
Fig. 1 is a perspective view showing an embodiment of a thin film magnetic head of the present invention;
Fig. 2 is a perspective view showing a thin film magnetic head chip of the magnetic head shown in Fig. 1;
Figs. 3 and 4 are sectional views taken along the lines A - A and B - B of Fig. 2, respectively;
Figs. 5 and 6 are views showing manufacturing steps of the thin film magnetic head chip in Fig. 2;
Fig. 7 is a top plan view of the head chip in Fig. 3;
Fig. 8 is a perspective view showing a plurality of reproducing heads and recording heads formed on the same substrate; and
Figs. 9 and 10 are perspective views showing a prior art thin film magnetic head of a serial-serpentine type, formed of thin film magnetic head chips.

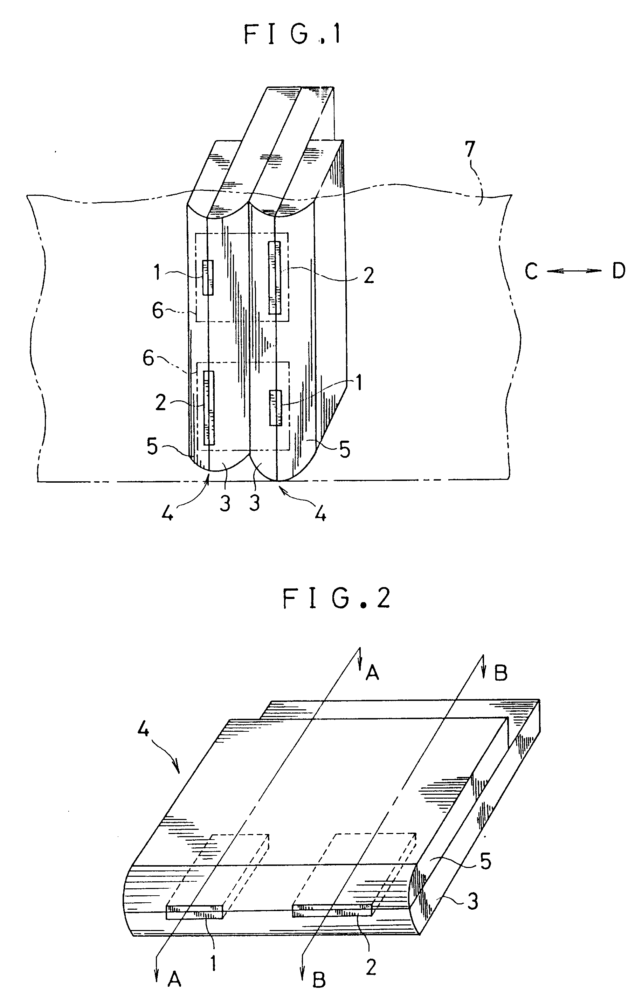

As shown in Fig. 1, a thin film magnetic head of a serial-serpentine type includes two thin film magnetic head chips 4. Each of the head chips 4 has a reproducing head portion 1 and recording head portion 2 disposed on the same substrate with a distance corresponding to a track pitch of a magnetic tape 7 multiplied by an integer and a head protecting plate 5 covering those head portions 1, 2 for protection. The reproducing head portion 1 and recording head portion 2 are formed of a lower magnetic film, coil conductor, upper magnetic film and insulation layers interposed therebetween, which will be described below.

In the above mentioned thin film magnetic head, a pair of recording/reproducing head portions 6 are defined. The recording head portion 2 in one of the head chips 4 and the reproducing head portion 1 in the other are mated to form one of the recording/reproducing head portions 6 while the reproducing head portion 1 in the former of the head chips 4 and the recording head portion 2 in the latter are mated to form the other. Those recording/reproducing head portions 6 are positioned with the respective recording and reproducing head portions 1, 2 inverted to each other with respect to the traveling direction of the magnetic tape 7. As a result, the upper recording/reproducing head portion 6 shown in Fig. 1 is used for recording/reproducing when the magnetic tape 7 is moved in a direction of an arrow C, and the lower recording/reproducing head portion 6 is used when the magnetic tape 7 is moved in a direction of an arrow D.

Thus, according to the present invention as defined in the appended claims, a thin film magnetic head of a serial-serpentine type is provided which has two thin film magnetic head chips 4 disposed in parallel. Such a thin film magnetic head having two head chips has a simple structure and therefore its manufacturing process can be simplified, compared to a conventional thin film magnetic head having three head chips. Additionally, the tape 7 can be easily kept in an appropriate position relative to each of the head chips 4, so that the data loss due to azimuth error or deviation from recording tracks can be avoided. The tape 7 can also be moved on each head chip 4 and be in contact with the same in a stable manner, so that the loss of space can be reduced.

The above mentioned reproducing head portion 1 and recording head portion 2 utilize electromagnetic induction caused by an electroconductive coil layer to perform the reproducing and recording function, respectively. A characteristic required of a recording head and that of a reproducing head are different. Usually, the reproducing head and the recording head are different in the configuration and thickness of a lower magnetic film, those of an upper magnetic film, the length of a gap and the width of a track so as to exhibit the required characteristics in the optimum way. However, it is not desirable to form the reproducing head portion 1 and the recording head portion 2 on the same substrate 3 individually with different process because the manufacturing steps are doubled. Thus, the reproducing head portion 1 and the recording head portion 2 are simultaneously formed on the same substrate 3.

In forming the lower magnetic films on the substrate 3, for example, the lower magnetic film in the recording head portion 2 must be thicker than that of the reproducing head portion 1 in the light of recording capability of the recording head portion 2 and reproducing resolution of the reproducing head portion 1. The process to form those lower magnetic films in different thickness from each other comprises the sequential steps of depositing a magnetic film of Fe - Aℓ - Si, Ni - Fe or the like in the reproducing head portion 1 and recording head portion 2 in the thickness corresponding to the desired difference in thickness therebetween, removing a prescribed part of the magnetic film in the reproducing head 1, depositing magnetic film of Fe - Aℓ - Si, Ni - Fe or the like in required thickness in the reproducing head portion 1 and recording head portion 2, and patterning the magnetic film into a desired configuration in the reproducing head portion 1 and recording head portion 2. In this way, the lower magnetic film of desired configuration and thickness can be provided in the reproducing head portion 1 and recording head portion 2.

Usually, a gap of the recording head portion 2 is made larger than that of the reproducing head portion 1 in the light of recording capability of the recording head portion 2 and reproducing resolution of the reproducing head portion 1. The gaps also are formed in the same way as in the formation of the above mentioned lower magnetic films. The process comprises the steps of depositing a thin film of SiO₂, Aℓ₂O₃ or the like in the reproducing head portion 1 and recording head portion 2 in the thickness corresponding to the desired difference in thickness therebetween, removing the thin film in a pre-gap portion of the reproducing head portion 1 by etching, depositing thin films of SiO₂, Aℓ₂O₃ or the like in required thickness in the reproducing head portion 1 and recording head portion 2, and patterning the thin film into a desired configuration in the reproducing head portion 1 and recording head portion 2. In this way, the gap of the desired lengths can be provided in the reproducing head portion 1 and recording head portion 2.

Also, with regard to the configuration and thickness of the upper magnetic film and the thickness of an electroconductive coil layer, desired formation can be attained by the same process as in the above. The difference of a plan view, for example, the width difference of tracks can be easily made by use of a photomask having slits in accord with the difference.

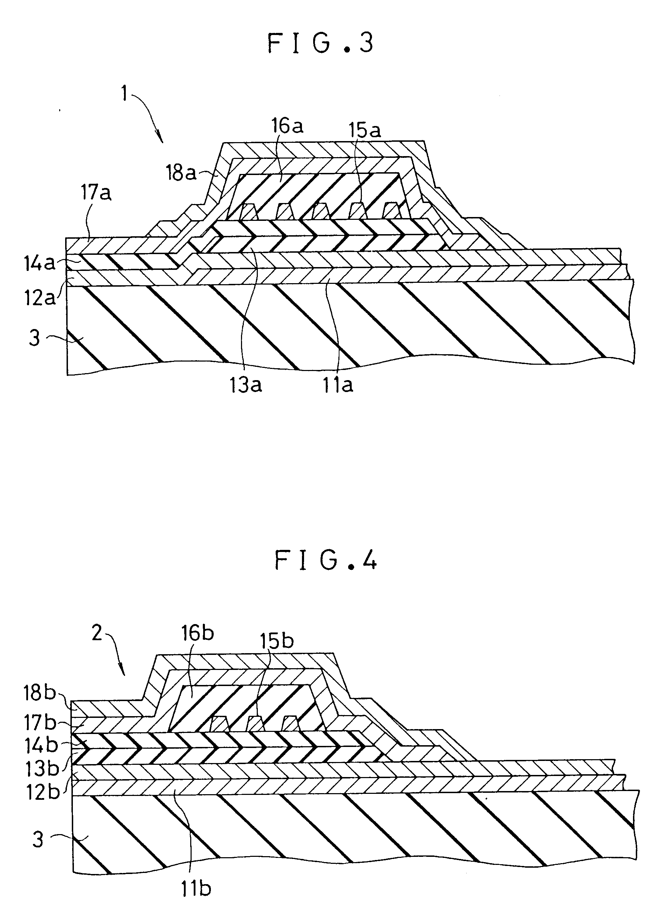

Figs. 3 and 4 are sectional views taken along the lines A - A and B - B of Fig. 1 with the protecting plate 5 being omitted. In these figures, reference numerals 11a, 11b designate first lower magnetic films; numerals 12a, 12b second lower magnetic films, numerals 13a, 13b first gap layers, numerals 14a, 14b second gap layers; numerals 15a, 15b electroconductive coil layers; numerals 16a, 16b insulation layers; 17a, 17b first upper magnetic films and numerals 18a, 18b second upper magnetic films.

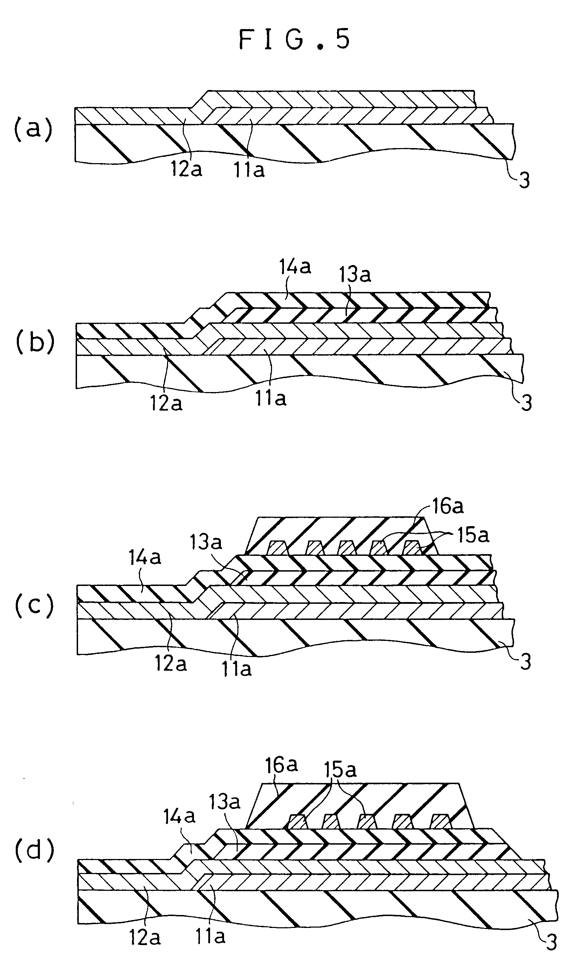

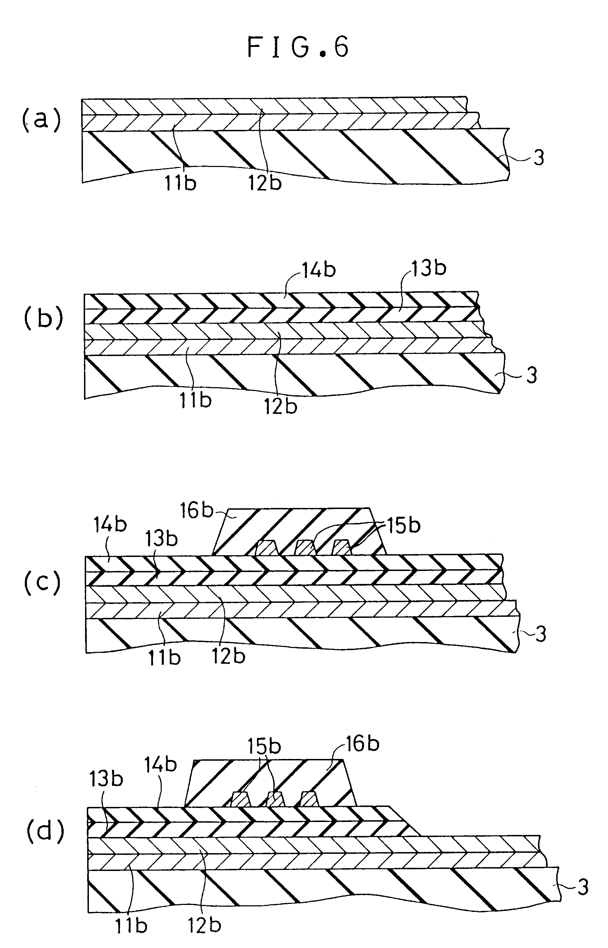

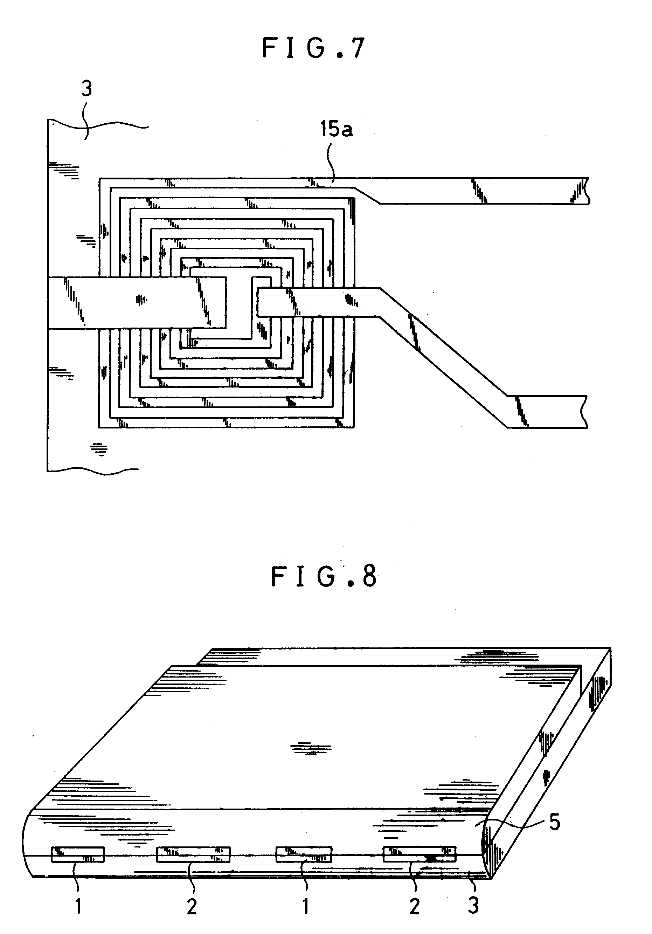

Figs. 5 and 6 are sectional views illustrating the steps of manufacturing the reproducing head portion 1 and the recording head portion 2. Referring to Figs. 5(a) and 6(a), a magnetic thin film of amorphous substance including Ni - Fe, Fe - Aℓ - Si or Co is deposited on the substrate 3 of an Aℓ₂O₃ sintered substrate, an Mn - Zn ferrite substrate, an Ni - Z ferrite substrate or a glass-ceramics substrate by sputtering or electron beam vapor deposition. The magnetic thin film is etched into a predetermined configuration by means of wet-etching or ion-beam etching so that the lower magnetic films 11a, 11b are simultaneously formed. Then, the second lower magnetic films 12a, 12b are simultaneously formed similar to the lower magnetic films 11a, 11b. As can be seen in Figs. 5(b) and 6(b), a thin film of SiO₂, Aℓ₂O₃ or SiN₄ is deposited by means of plasma-CVD, sputtering or electron beam deposition. The thin film is etched into a predetermined configuration so that the first gap layers 13a, 13b are simultaneously formed. Then, the second gap layers 14a, 14b are simultaneously deposited of the same material and in the same way as the first gap layers 13a, 13b. Referring to Figs. 5(c) and 6(c), a conductor layer of Au, Aℓ or Ag is deposited by means of electron beam deposition or sputtering. The conductor layer is etched into a coil so that the electroconductive coil layers 15a, 15b are simultaneously formed. Then, the insulation layers 16a, 16b are simultaneously deposited of the same material and in the same way as the first gap layers 13a, 13b. Further, as shown in Figs. 5(d) and 6(d), the first gap layers 13a, 13b and the second gap layers 14a, 14b are etched into a predetermined configuration by means of wet-etching or ion-beam etching. Then, as shown in Figs. 3 and 4, the first upper magnetic films 17a, 17b and the second upper magnetic films 18a, 18b are deposited one after another of the same material and in the same way as the first lower magnetic films 11a, 11b. Fig. 7 is a top plan view of Fig. 3 showing a plane configuration of the electroconductive coil layer.

The head protecting plate 5 is attached to the substrate 3 which has been provided with the magnetic films and electroconductive coil layer. After that, the substrate 3 is grounded and polished in the surface where a recording medium slides, and thus the head chip 4 is obtained. The head chips 4 are disposed in parallel with the reproducing head portions 1 and recording head portions 2 being positioned in an appropriate relation. Thus the thin film magnetic head is obtained.

In the thin film magnetic head, as shown in Fig. 8, a plurality of reproducing head portions 1 and a plurality of recording head portions 2 may be alternately aligned so as to enable simultaneous recording/reproducing of more than one tracks.

As has been described, the thin film magnetic head according to the present invention includes a substrate, and a lower magnetic film, an electroconductive coil layer, an upper magnetic film and insulation layers interposed therebetween, which are formed on the substrate. In the thin film magnetic head, a reproducing head portion and a recording head portion are disposed with a certain distance on the same substrate.

Thus, according to the present invention as defined in the appended claims, a thin film magnetic head of a serial-serpentine type is provided which has a simple structure and therefore has a simplified manufacturing process. Additionally, a tape can be easily kept in an appropriate position relative to each of head chips, so that the data loss due to azimuth error or deviation from recording tracks can be avoided. The tape can also be moved on each head chip and be in contact with the same in a stable manner, so that the loss of space can be reduced.

## Claims

1. A thin-film magnetic head arrangement for recording and reproducing information on an elongate magnetic recording medium that is longitudinally movable bidirectionally past the head arrangement in forward and reverse movements, comprising a plurality of head chips (4), each of which has first and second heads (1, 2) spaced apart along a substrate (3), each head comprising a plurality of layers in stacked relation on said substrate which extend to a common edge of the latter, said stacked layers comprising a lower magnetic layer (11a, 11b), a first insulating layer (13a, 13b), an electro-conductive coil layer (15a, 15b), a second insulating layer (16a, 16b) and an upper magnetic layer (17a, 17b), said heads (1, 2) being aligned along a direction normal to the direction of the longitudinal movement of the recording medium, characterised in that the first and second heads (1, 2) of each head chip (4) are dedicated respectively as reproducing and recording heads, being differently constructed to provide prescribed different characteristics for usage as reproducing and recording heads, in that the arrangement comprises two said head chips (4, 4) disposed side by side and in inverted relation such that the heads all abut a common plane with respective pairs of heads on the two substrates of said head chips disposed parallelly and aligned with respect to the longitudinal movement of the recording medium and such that a reproducing head of a first one of the two head chips is aligned with a recording head of the second head chip and the recording head of the said first head chip is aligned with the reproducing head of the second chip, said arrangement being for use in read-after-write recording of information in the forward and reverse directions of longitudinal movement of a multichannel medium.

2. A thin-film magnetic head arrangement in accordance with Claim 1 wherein in each head chip (4) the recording head and the reproducing head are formed of the same plural layers in a common material-deposition and material-patterning process.

3. A thin film magnetic head arrangement in accordance with Claim 1 or Claim 2 wherein in each head chip (4) at least one of the said lower and upper magnetic layers has a portion at the reproducing surface of the reproducing head that is thinner than the corresponding magnetic layer at the recording surface of the recording head.

4. A thin-film magnetic head arrangement in accordance with any preceding claim wherein in each head chip (4) at least one of the said first and second insulating layers has a portion at the reproducing surface of the reproducing head that is thinner than the respective insulating layer at the recording surface of the recording head.

5. A thin-film magnetic head arrangement in accordance with Claim 3 or Claim 4 when appendant on Claim 3 wherein in each head chip (4) the said lower magnetic layer comprises a first magnetic sublayer (12a, 12b) and a second magnetic sublayer (13a, 13b) laminated thereon.

6. A thin-film magnetic head arrangement in accordance with Claim 3, or Claim 4 or 5 when appendant on Claim 3, wherein in each head chip (4)the upper magnetic layer comprises a first magnetic sublayer (17a, 17b) and a second magnetic sublayer (18a, 18b) laminated thereon.

7. A thin-film magnetic head chip in accordance with Claim 3, or any of Claims 4 to 6 when appendant on Claim 3, wherein in each head chip (4) one of said insulating layers comprises a first sublayer (13a, 13b) and a second sublayer (14a, 14b) superimposed thereon.

## Patentansprüche

1. Dünnfilm-Magnetkopfanordnung zum Aufzeichnen und Wiedergeben von Information auf einem langgestreckten magnetischen Aufzeichnungsmedium, das in Längsrichtung bidirektional entlang der Kopfanordnung bewegbar ist, mit mehreren Kopfchips (4), von denen jeder einen ersten und einen zweiten Kopf (1, 2) aufweist, die entlang eines Substrats (3) voneinander beabstandet sind, wobei jeder Kopf mehrere aufeinandergestapelte Schichten auf dem Substrat aufweist, die sich zu einer gemeinsamen Kante des letzteren hin erstrecken, wobei die gestapelten Schichten eine untere magnetische Schicht (11a, 11b), eine erste Isolierschicht (13a, 13b), eine elektrisch leitende Spulenschicht (15a, 15b), eine zweite Isolierschicht (16a, 16b) und eine obere magnetische Schicht (17a, 17b) aufweisen, wobei die Köpfe (1, 2) entlang einer Richtung rechtwinklig zur Richtung der Längsbewegung des Aufzeichnungsmediums ausgerichtet sind, **dadurch gekennzeichnet**, daß der erste und zweite Kopf (1, 2) jedes Chips (4) jeweils eine Zuordnung als Wiedergabe- und Aufzeichnungskopf aufweisen, die voneinander verschieden konstruiert sind, um vorgegebene verschiedene Charakteristiken zur Verwendung als Wiedergabe- und Aufzeichnungskopf aufzuweisen, daß die Anordnung zwei der Kopfchips (4, 4) aufweist, die nebeneinander und mit umgekehrter Beziehung in solcher Weise angeordnet sind, daß die Köpfe alle an eine gemeinsame Ebene stoßen, wobei jeweilige Kopfpaare auf den zwei Substraten der Kopfchips parallel angeordnet und zur Längsbewegung des Aufzeichnungsmediums ausgerichtet sind, und in solcher Weise, daß der Wiedergabekopf eines ersten der zwei Kopfchips mit dem Aufzeichnungskopf des zweiten Kopfchips ausgerichtet ist und der Aufzeichnungskopf des ersten Kopfchips mit dem Wiedergabekopf des zweiten Kopfchips ausgerichtet ist, wobei die Anordnung zur Verwendung beim Aufzeichnen durch Lesennach-Schreiben von Information in Vorwärts- und Rückwärtsrichtung der Längsbewegung eines Mehrkanalmediums dient.

2. Dünnfilm-Magnetkopfanordnung nach Anspruch 1, bei der in jedem Kopfchip (4) der Aufzeichnungskopf und der Wiedergabekopf aus denselben mehreren Schichten bei einem Prozeß mit gemeinsamer Materialabscheidung und Materialmusterung hergestellt wurden.

3. Dünnfilm-Magnetkopfanordnung nach Anspruch 1 oder Anspruch 2, bei der in jedem Kopfchip (4) von der unteren und oberen magnetischen Schicht mindestens eine einen Abschnitt an der Wiedergabeoberfläche des Wiedergabekopfs aufweist, der dünner als die entsprechende magnetische Schicht an der Aufzeichnungsoberfläche des Aufzeichnungskopfs ist.

4. Dünnfilm-Magnetkopfanordnung nach einem der vorstehenden Ansprüche, bei der in jedem Kopfchip (4) von der ersten und zweiten Isolierschicht mindestens eine einen Abschnitt an der Wiedergabefläche des Wiedergabekopfs aufweist, der dünner ist als die entsprechende Isolierschicht an der Aufzeichnungsfläche des Aufzeichnungskopfs.

5. Dünnfilm-Magnetkopfanordnung nach Anspruch 3 oder Anspruch 4 in Abhängigkeit von Anspruch 3, bei der in jedem Kopfchip (4) die untere magnetische Schicht eine erste magnetische Unterschicht (12a, 12b) und eine darauf laminierte zweite magnetische Unterschicht (13a, 13b) aufweist.

6. Dünnfilm-Magnetkopfanordnung nach Anspruch 3 oder einem der Ansprüche 4 oder 5 in Abhängigkeit von Anspruch 3, bei der in jedem Kopfchip (4) die untere magnetische Schicht eine erste magnetische Unterschicht (17a, 17b) und eine darauf laminierte zweite magnetische Unterschicht (18a, 18b) aufweist.

7. Dünnfilm-Magnetkopfchip nach Anspruch 3 oder nach einem der Ansprüche 4 bis 6 in Abhängigkeit von Anspruch 3, bei dem in jedem Chip (4) eine der Isolierschichten eine erste Unterschicht (13a, 13b) und eine darüberliegende zweite Unterschicht (14a, 14b) aufweist.

## Revendications

1. Agencement de tête magnétique à couche mince pour l'enregistrement et la reproduction de données sur moyen d'enregistrement magnétique en allongement commandé en mouvement longitudinal bi-directionnel pour passer l'agencement de tête en sens avant et inverse, comportant une pluralité de pastilles de tête (4), chacune ayant une première et deuxième tête (1,2) décalées le long d'un substrat (3), chaque tête comportant une pluralité de couches en rapport empilé sur ledit substrat et s'allongeant jusqu'à un bord commun du substrat, lesdites couches empilées comportant une couche magnétique inférieure (11a, 11b), une première couche isolante (13a, 13b), une couche de bobine électro-conductrice (15a,15b), une deuxième couche isolante (16a, 16b) et une couche magnétique supérieure (17a, 17b) lesdites têtes (1, 2) étant alignées en sens normal par rapport au sens de mouvement longitudinal du moyen d'enregistrement, caractérisé en ce que les première et deuxième têtes (1, 2) de chaque pastille de tête (4) sont réservées respectivement à la reproduction et à l'enregistrement, étant de construction différente pour permettre les différentes caractéristiques spécifiques d'emploi comme têtes de reproduction et d'enregistrement, en ce que l'agencement comporte deux desdites pastilles de tête (4,4) disposées côte à côte et en rapport inverse de telle façon que toutes les têtes touchent un plan commun avec des paires respectives de têtes sur les deux substrats desdites pastilles de tête disposées parallèles et alignées par rapport au mouvement longitudinal du moyen d'enregistrement de telle façon que la tête de reproduction d'une première des deux pastilles de tête est alignée avec une tête d'enregistrement de la deuxième pastille de tête et la tête d'enregistrement de la première pastille de tête est alignée avec la tête de reproduction de la deuxième pastille, ledit agencement étant prévu pour l'enregistrement de données en «lecture après écriture» dans les sens avant et inverse du mouvement longitudinal d'un moyen multivoies.

2. Agencement à tête magnétique en couche mince selon la revendication 1 dont pour chaque pastille de tête (4) les têtes d'enregistrement et de reproduction sont formées des mêmes couches multiples par la voie d'un procédé commun de dépôt de matière et d'agencement de matière.

3. Agencement à tête magnétique en couche mince selon la revendication 1 ou la revendication 2 dont pour chaque pastille de tête (4) une desdites couches magnétiques supérieure et inférieure prévoit une portion en surface de reproduction de tête de reproduction qui est plus mince que la couche magnétique correspondante en surface d'enregistrement de la tête d'enregistrement.

4. Agencement à tête magnétique en couche mince selon l'une ou l'autre des revendications précédentes dont en chaque pastille de tête (4) l'une des première et deuxième couches isolantes au minimum prévoit une portion en surface de reproduction de la tête de reproduction qui est plus mince que la couche isolante respective en surface d'enregistrement de la tête d'enregistrement.

5. Agencement à tête magnétique en couche mince selon la revendication 3 ou la revendication 4 dont pour chaque pastille de tête (4) ladite couche magnétique inférieure comporte une première sous-couche magnétique (12a, 12b) et une deuxième sous-couche magnétique (13a, 13b) appliquée en surface.

6. Agencement à tête magnétique en couche mince selon la revendication 3, ou les revendications 4 ou 5 prise en conjonction avec la revendication 3, dont pour chaque pastille de tête (4) ladite couche magnétique supérieure comporte une première sous-couche magnétique (17a, 17b) et une deuxième sous-couche magnétique (18a, 18b) appliquée en surface.

7. Agencement à tête magnétique en couche mince selon la revendication 3, ou l'une ou l'autre des revendications 4 à 6 prise en conjonction avec la revendication 3, dont pour chaque pastille de tête (4) l'une desdites couches isolantes comporte une première sous-couche (13a, 13b) et une deuxième sous-couche (14a, 14b) appliquée en surface.
